# EUROPEAN PATENT APPLICATION

(11) **EP 1 103 972 A1**
(43) Date of publication of application: **30.05.2001**
(21) Application number: 00921107.9
(22) Date of filing: 28.04.2000
(51) Int. Cl.: G11B 25/04

(54) **DISK DRIVE AND DISK CARTRIDGE**

(30) Priority: 06.05.1999 JP 12615299
(71) Applicant: Sony Corporation, Tokyo 141-0001 (JP)
(72) Inventor: MASAKI, Hiroshi, Sony Corporation, Tokyo 141-0001 (JP); YAMAMOTO, Kazutoshi, Sony Corporation, Tokyo 141-0001 (JP)
(74) Representative: Thévenet, Jean-Bruno
(86) International application number: JP0002855
(87) International publication number: WO0068948

(57) **Abstract**

The present invention provides a disc drive device including a casing which can be detachably mounted in a PC card slot of the PCMCIA TYPE II standard, provided in an electrical equipment, a cartridge holder for holding a disc cartridge having a flexible magnetic disc in it at a cartridge loading/unloading position enabling loading/unloading of the disc cartridge and a cartridge mounting position enabling information recording and/or reproduction for the flexible magnetic disc, and for causing movement of the disc cartridge, a magnetic head for recording and/or reproducing the information for the flexible magnetic disc, a head movement mechanism for causing linear movement of the magnetic head radially of the magnetic disc, a spindle motor for rotationally driving the magnetic head and a connection terminal unit provided facing the outer rim of the casing for being electrically connected to a terminal unit mounted in the PC card slot. This configuration permits the overall size and thickness of the device to be reduced.

## Description

### Technical Field

This invention relates to a disc drive device removably mounted on a card loading unit provided on an electronic equipment, such as a notebook computer, and a disc cartridge loaded on this disc drive device.

### Background Art

As an electronic equipment, a portable notebook personal computer is in use. This type of the notebook personal computer has a PCMCIA (Personal Computer Memory Card International Application) standard loading portion, termed below as a PC card slot, in which can be loaded variable card type devices, such as variable IC (integrated circuit) memory card or a fax modem card, referred to below as a PC card. Among this PCMCIA standard PC cards, there are known TYPE I, TYPE II and TYPE III having respective different dimensional standards.

In PC card slots in the above-mentioned notebook personal computer, there may be selectively loaded and used variable card type devices selectively as necessary.

Meanwhile, the portable electronic equipment, such as a portable computer or a digital still camera, is required to be used in conjunction with an information recording and/or reproducing device, which lends itself to a smaller size and lighter weight of the entire equipment and which moreover is able to record and/or reproduce the information of a larger capacity.

As this sort of the information recording and/or reproducing device, there are known a disc cartridge and a disc drive device marketed under the trade name of "click!" by Eye-Omega Inc. The outer dimension of this disc cartridge is prescribed to be 54.9 mm in length, 50.1 mm in width and 1.95 mm in height.

On the other hand, the PCMCIA TYPE II standard states that the prescribed width of a main body portion of a PC card, more precisely its portion 5 mm in thickness, be 48 mm. So, the disc drive device, having loaded thereon a disc cartridge 50.1 mm in width, is extremely difficult to load in a PC card slot of PCMCIA TYPE II.

This disc cartridge employs a rotary type movement mechanism in its head movement mechanism adapted for moving a head portion relative to a signal recording surface in recording and/or reproduction. In order to avoid the movement mechanism from abutting on the main cartridge body portion during rotation of the head part, there is formed a substantially sector-shaped recording and/or reproducing aperture with a center angle of approximately 60°. That is, since the recording and/or reproducing aperture is of a larger size, a flexible magnetic disc is subjected to oscillations (fluttering) when the flexible magnetic disc is run in rotation at an elevated speed. For fear of collision of the signal recording surface against the head portion, it is retained to be difficult to raise the number of revolutions. For example, in this sort of the conventional disc, the number of revolutions is set to and cannot be increased beyond 2940 rpm. So, it is extremely difficult with this disc cartridge to increase the recording capacity further.

There is also such disc cartridge in which a recording and/or reproducing aperture is formed in its lateral surface. In this disc cartridge, the magnetic head needs to be moved into contact with and away from the signal recording surface of the magnetic disc over a distance provided inwardly of the main cartridge body portion, thus increasing the thickness of the disc cartridge.

In another conventional disc cartridge, adapted for coping with a disc drive device, a head part of which is moved linearly relative to the radial direction of the flexible magnetic disc, a substantially rectangular recording and/or reproducing aperture is formed in both major surfaces of the disc cartridge for extending across the inner and outer rims of the disc. So, it is necessary for a disc drive device, adapted for coping with this type of the disc cartridge, to be introduced into the recording and/or reproducing aperture as its head lies astride the lateral surface of the main cartridge body portion. Therefore, in the disc drive device, on which is mounted the conventional disc cartridge, it is necessary to provide a sufficient allowance along the thickness to permit the head to straddle the lateral surface of the main body portion of the disc cartridge in order to permit the head to be introduced into the recording and/or reproducing aperture in the disc cartridge. Thus, with this type of the disc drive device, the device tends to be undesirably increased in thickness in order to permit the head movement.

### Disclosure of the Invention

It is therefore an object of the present invention to provide a disc drive device which can detachably mounted in a PC card slot provided in an electrical equipment and a disc cartridge which is mounted on the disc drive device.

For accomplishing the above object, the present invention provides a disc drive device disc drive device including a casing which can be detachably mounted in a PC card slot of the PCMCIA TYPE II standard, provided in an electrical equipment, a cartridge holder for holding a disc cartridge having a flexible magnetic disc housed therein at a cartridge loading/unloading position enabling loading/unloading of the disc cartridge and a cartridge loading/unloading position enabling information recording and/or reproduction for the flexible magnetic disc, and for causing movement of the disc cartridge, a magnetic head for recording and/or reproducing the information for the flexible magnetic disc, a head movement mechanism for causing linear movement of the magnetic head radially of the magnetic disc, a spindle motor for rotationally driving the magnetic head and a connection terminal unit provided facing the outer rim of the casing for being electrically connected to a terminal unit mounted in the PC card slot.

In the present disc drive device, a connection terminal unit provided facing the outer rim of the casing is electrically connected to the terminal unit of the PC card slot of the PCMCIA TYPE II standard, provided in an electrical equipment to permit the casing to be mounted in the PC card slot. With the disc drive device loaded in the PC card slot, the disc cartridge having a flexible magnetic disc is loaded/unloaded into or from the cartridge holder.

The present invention also provides a disc cartridge loaded on a disc drive device including a casing which can be detachably mounted in a PC card slot of the PCMCIA TYPE II standard, provided in an electrical equipment, a cartridge holder for holding a disc cartridge having a flexible magnetic disc housed therein at a cartridge loading/unloading position enabling loading/unloading of the disc cartridge and a cartridge loading/unloading position enabling information recording and/or reproduction for the flexible magnetic disc, and for causing movement of the disc cartridge, a magnetic head for recording and/or reproducing the information for the flexible magnetic disc, a head movement mechanism for causing linear movement of the magnetic head radially of the magnetic disc, a spindle motor for rotationally driving the magnetic head, and a connection terminal unit provided facing the outer rim of the casing for being electrically connected to a terminal unit mounted in the PC card slot, wherein the disc cartridge includes a main cartridge body unit housing the flexible magnetic disc therein. The main cartridge body unit has a recording and/or reproducing aperture for causing a portion of a signal recording region of the flexible magnetic disc to be exposed to outside across the inner and outer rims of the flexible magnetic disc. The recording and/or reproducing aperture is formed in an uninterrupted fashion across both major surfaces and a lateral surface of the main cartridge body unit.

In this disc cartridge, in which the recording and/or reproducing aperture is formed in an uninterrupted fashion across both major surfaces and a lateral side of the main cartridge body unit, the extent of movement of the flexible magnetic disc into and out of contact with the signal recording surface of the flexible magnetic disc in a direction at right angles to the signal recording surface can be reduced, thus enabling the main cartridge body unit to be reduced in thickness. Moreover, since the opening area of the recording and/or reproducing aperture is reduced, it is possible to suppress deviation of the flexible magnetic disc from true planarity, otherwise produced on rotation of the flexible magnetic disc at a higher speed. So, it is possible to increase the number of revolutions of the magnetic disc as compared to that with the conventional disc cartridge thus realizing high recording density of the magnetic disc.

Other objects, features and advantages of the present invention will become more apparent from the following detailed description of the present invention and the claims.

### Brief Description of the Drawings

Fig. 1 is a perspective view showing a disc drive device according to the present invention and a personal computer on which to load this disc drive device.
Fig.2 is an exploded perspective view of the disc drive device shown in Fig.1.
Fig.3 is a perspective view showing a disc cartridge used in the disc drive device shown in Fig. 1.
Fig.4 is a perspective view showing the opened state of the recording and/or reproducing aperture of the disc cartridge shown in Fig.3.

### Best mode for Carrying out the Invention

Referring to the drawings, a disc drive device loaded on a notebook personal computer, and a disc cartridge applied to this disc drive device, according to the present invention, will be explained in detail.

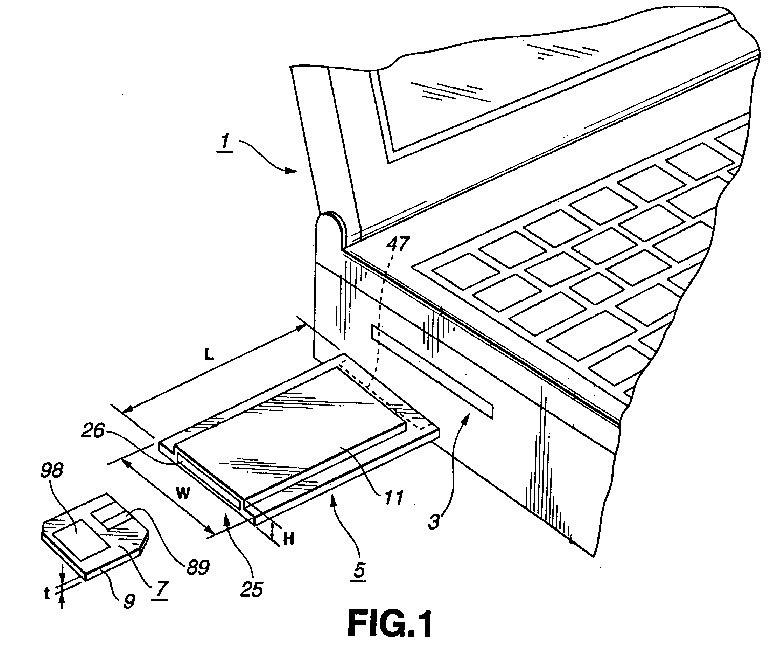

A notebook personal computer 1, on which is detachably mounted a disc drive device according to the present invention, includes a PC card slot 3, in which can be detachably mounted a PC card of the PCMCIA (Personal Computer Memory Card International Association), such as a memory card or a fax modem card, as shown in Fig. 1. Meanwhile, the PC card slot 3, provided on the notebook personal computer 1, is of the TYPE II(Release 2.1) specifications.

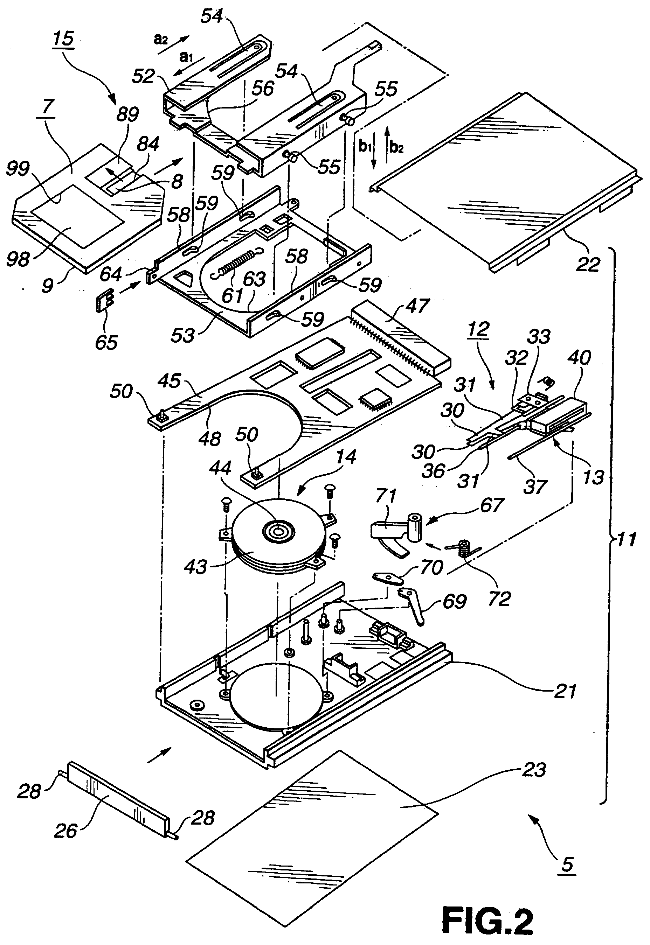

Referring to Figs. 1 and 2, the disc drive device 5 according to the present invention includes a casing 11, loaded in the PC card slot 3 provided in the notebook personal computer 1, a head mechanism 12 for recording and/or reproducing the information on or from a flexible magnetic disc 8, accommodated in the disc cartridge 7, and a movement mechanism 13 for linearly moving the head mechanism 12 along the radius of the flexible magnetic disc 8. The disc drive device 5 also includes a disc rotating driving unit 14 for rotationally driving the flexible magnetic disc 8 and a loading mechanism 15 for causing movement of the disc cartridge 7 between a cartridge loading/unloading position enabling loading/unloading of the disc cartridge 7 into and from the device and a cartridge mounting position enabling information recording and/or reproduction on or from the disc cartridge 7.

Referring to Fig. 2, the casing 11 includes a substantially rectangular base member 21, formed of a metallic material, an upper cover 22 mounted on this base member 21 to protect the inner area of the base 21 member, and a lower cover 23 mounted on the bottom surface on the outer periphery of the base member 21.

Referring to Fig. 1, the outer dimension of the casing 11 is such that it has a length L, a width W and a height H of 85 mm, 54 mm and 5 mm, respectively, in agreement with the PCMCIA TYPE II standard for PC cards.

The casing 11 is provided with a cartridge insertion/detachment opening 25 for inserting/detaching the disc cartridge 7 into or from the device, this cartridge insertion/detachment opening 25 is openably closed by a door 26. The door 26 is in the form of a substantially rectangular plate rotatably supported on the cartridge insertion/detachment opening 25 of thecasing 11 through rotary pivots 28, 28 provided on both ends thereof. The door 26 is biased by a torsion coil spring, not shown, in a direction of closing the cartridge insertion/detachment opening 25, and is opened by being acted on by the front side end of the disc cartridge 7 introduced into the cartridge insertion/detachment opening 25 of the casing 11.

The head mechanism 12 is mounted on the base member 21 of the casing 11, at a position facing the disc cartridge 7 mounted on the control loading position, such as to be moved radially of the flexible magnetic disc 8 by the movement mechanism 13. This head mechanism 12 includes heads 30, 30 for recording and/or reproducing the information on or from the signal recording region on each major surface of the flexible magnetic disc 8, a pair of supporting arms 31, 31 for supporting these heads 30, 30 at the distal ends thereof, base plates 32, 32, provided at the proximal ends of the supporting arms 31, 31, and a head carriage 33 for holding these supporting arms 31, 31 through these base plates 32, 32, as shown in Fig.2.

The heads 30, 30 are arranged facing each other with both major surfaces of the flexible magnetic disc 8 in-between. The supporting arms 31, 31 are thin metal sheets tapered in width towards the distal ends. The surfaces of the distal ends of the supporting arms 31, 31 facing the signal recording regions of the major surfaces of the flexible magnetic disc 8 carry the heads 30, 30.

The base plate 32 is formed of a metallic material and is secured to the proximal ends of the supporting arms 31, 31, while being mounted on a head carriage 33, which is formed of a tough material and is carried by the movement mechanism 13.

The head mechanism 12 is adapted for being moved approximately 0.7 mm in a direction perpendicular to the signal recording surface of the head 30 configured for being moved into contact with and away from the signal recording surface of the flexible magnetic disc 8. The head mechanism 12 may be moved within the main cartridge body portion, having a thickness of 2 mm, as will be explained subsequently.

The movement mechanism 13 is mounted on the base member 21 and includes a main guide shaft 36 and a sub-guide shaft 37, for movably supporting the head carriage 33 of the head mechanism 12, and an electro-magnetic driving unit 40 for causing linear movement of the head 30 of the head mechanism 12 through the head carriage 33 radially of the flexible magnetic disc 8, as shown in Fig.2. This electro-magnetic driving unit 40 has a thickness of, for example, 3 mm and includes a driving coil inserted through a yoke, not shown. By the driving coil being fed with the driving current, the head is moved linearly, along the radius of the flexible magnetic disc 8 placed on a disc table of the disc rotating driving unit 14.

Referring to Fig.2, the disc rotating driving unit 14 includes a spindle motor 43 mounted on the base member 21, and a disc table 44 rotationally driving by the spindle motor 43 as the flexible magnetic disc 8 is set thereon. The spindle motor 43 has a thickness of approximately 2 mm.

The disc table 44 is mounted on the distal end of the spindle motor 43 for rotation in unison with the spindle motor 43. On this disc table 44 is set a center hub of the flexible magnetic disc 8 intruded through the table entrance opening in the disc cartridge 7.

The disc drive device 5 includes an electronic circuit board 45, mounted on the base member 21 provided with the disc rotating driving unit 14 and with a loading unit 15, as shown in Fig.2. On the major surface of the electronic circuit board 45 are mounted a variety of electronic circuit components, as shown in Fig.2. On one end of the electronic circuit board 45 facing the outer rim of the casing 11 is mounted a connection terminal unit 47 electrically connected to a terminal, not shown, provided within the PC card slot 3 of the notebook personal computer 1.

In the major surface of the electronic circuit board 45 is bored a rotational driving cutout 48 for causing the table entrance opening of the disc cartridge 7 to face the disc table 44 of the disc rotating driving unit 14. On the electronic circuit board 45 are set upright a pair of positioning pins 50, 50 for setting the disc cartridge 7 at the cartridge loading position, so that, by introducing these positioning pins 50, 50 through a pair of positioning openings formed in the bottom surface of the disc cartridge 7, the disc cartridge 7 is loaded in position.

The loading unit 15 includes a cartridge holder 52 for holding the disc cartridge 7 loaded from the cartridge insertion/detachment opening 25, and a slide chassis 53 for causing the movement of the cartridge holder 52 between the cartridge loading/unloading position of enabling the loading/unloading the disc cartridge 7 to or from the cartridge holder 52 and the cartridge mounting position enabling the recording and/or reproduction of the information signals on or from the disc cartridge 7.

The cartridge holder 52, formed of a metallic material, is formed integrally with thrusting pieces 54, 54, on both width-wise sides of the surface thereof facing the major surface of the disc cartridge 7, for thrusting the disc cartridge 7 along the thickness. On the outer rim sides of the width-wise lateral surfaces of the cartridge holder 52 are mounted guide shafts 55, whereby the cartridge holder is supported for movement between the cartridge loading/unloading position and the cartridge mounting position.

The slide chassis 53 is mounted on the base member 21 for movement in the direction indicated by arrow a1 and a2 in Fig.2. On both lateral sides of the slide chassis 53, perpendicular to the movement direction, there are formed supports for movably supporting the cartridge holder 52 in the direction indicated by arrows b1 and b2 in Fig.2. In these supports are formed guide slots 59 into which are movably passed guide shafts 55 of the cartridge holder 52.

A torsion coil spring 61, adapted for biasing the slide chassis 53 in the direction indicated by arrow a1 in Fig.2, has its one end retained by the slide chassis 53. The torsion coil spring 61 has its other end formed on the base member 21 and elastically biases the slide chassis 53 in the direction indicated by arrow a1 in Fig.2 to bias the cartridge holder 52 in the direction indicated by arrow b1 in Fig.2. As the cartridge holder 52 is biased in the direction indicated by arrow b1, the disc cartridge 7 loaded thereon is loaded in the cartridge loading position.

This slide chassis 53 is provided with a rotational driving cutout 63 for causing the bottom surface of the disc cartridge 7 to face the disc table 44 of the rotationally driving unit 14. The slide chassis 53 is formed integrally with a protruding operating piece 64 adapted for ejecting the disc cartridge 7. The operating piece 64 carries a thrusting member 65 which, when thrust, causes the cartridge holder 52 to be moved in the direction indicated by arrow b2 to shift the cartridge holder 52 held by the cartridge holder 7 from the cartridge mounting position to the cartridge loading/unloading position.

On the base member 21, there is provided a shutter actuating mechanism 67 for opening/closing a shutter member provided on the disc cartridge 7, as shown in Fig.2. This shutter actuating mechanism 67 includes shutter actuating arms 69, 70, adapted for compressing against the shutter member of the disc cartridge 7, a rotationally driving member 71 for rotationally driving the shutter actuating arms 69, 70, and a torsion coil spring 72 for biasing the shutter actuating arms 69, 70 in a direction of compressing against the shutter member.

Referring to the drawings, the disc cartridge used in the above-described disc drive device is explained.

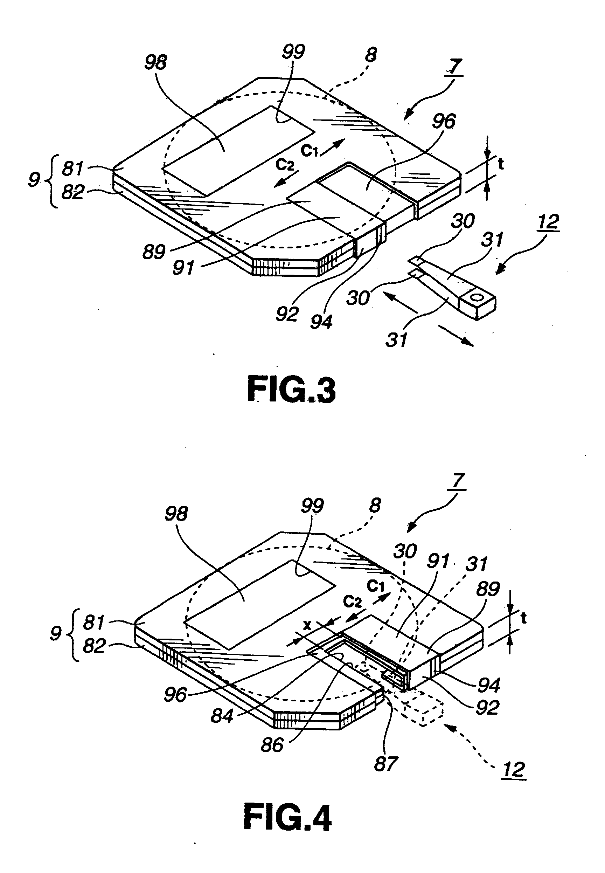

Referring to Figs.2 and 3, the disc cartridge 7 includes the flexible magnetic disc 8, as an information recording medium, and a main cartridge body unit 9 for holding the flexible magnetic disc 8 therein.

The flexible magnetic disc 8 is formed to a diameter of, for example, 1.7 inch, and has a center opening. In this center opening of the flexible magnetic disc 8 is mounted a metallic center hub. The flexible magnetic disc 8 has a recording capacity of the signal recording region approximately equal to 150 MB.

The main cartridge body unit 9 is made up of an upper cartridge half 81 and a lower cartridge half 82, combined together, and is formed to a thickness *t* on the order of 2 mm, as shown in Figs.1 and 3. The main cartridge body unit 9 is of a size in the fore-and-aft direction of 49 mm and a width-wise or left-to-right direction of 47 mm.

The main cartridge body unit 9 includes a table entrance opening, not shown, in order for the disc table 44 on the side disc drive device 5 rotationally driving the flexible magnetic disc 8 to be intruded into the main cartridge body unit 9, and a recording and/or reproducing aperture 84 for causing a portion of the signal recording region of the flexible magnetic disc 8 to face the head 30 of the head mechanism 12 on the side disc drive device 5.

The table entrance opening is of a substantially circular shape and is provided centrally of the major surface of the lower cartridge half 82. When the disc cartridge 7 is loaded on the disc drive device 5, the disc table 44 on the side disc drive device 5 is intruded from the table entrance opening into the inside of the main cartridge body unit 9. The disc cartridge 7 is set, as positioning means, not shown, protruding on the disc table 44, is intruded into a positioning hole provided in the center hub of the flexible magnetic disc 8, with the flexible magnetic disc 8 being then positioned in a pre-set fashion on a setting surface on the disc table 44.

Referring to Figs.3 and 4, the recording and/or reproducing opening 84 is made up of substantially rectangular openings 86, 86 in the major surfaces of the upper cartridge half 81 and the lower cartridge half 82 for facing each other and for extending across the inner and outer rims of the signal recording region of the flexible magnetic disc 8, and an opening 87 formed across lateral surfaces of the main cartridge body unit 9 for interconnecting the openings 86, 86. The openings 86, 86 formed in the major surfaces of the upper cartridge half 81 and the lower cartridge half 82 are formed to a width *x* on the order of, for example, 6 mm, with the width of the recording and/or reproducing aperture 84 being slightly larger than the width on the proximal side of the supporting arms 31 carrying the head 30 of the disc drive device 5 introduced into these openings 86, 86. That is, the width *x* of the openings 86, 86 of the recording and/or reproducing aperture 84 is selected to be of the minimum size necessary for the head 30 to be moved optimally along the radius of the flexible magnetic disc 8.

The disc cartridge 7 is also provided with a shutter member 89 for opening/closing the recording and/or reproducing aperture 84, as shown in Figs.3 and 4. This shutter member 89 is mounted for movement in the direction indicated by arrows c1 and c2 relative to the recording and/or reproducing aperture 84, as shown in Figs.3 and 4. This shutter member 89 is formed to a substantially U shape from e.g., a metallic material, and is made up of shutter portions 91, 91 for opening/closing the openings 86, 86 of the recording and/or reproducing aperture 84, and a connecting portion 92 interconnecting these shutter portions 91, 91, as shown in Figs .3 and 4. The shutter member 89 carries one end of a torsion coil spring, not shown, for biasing the shutter member 89 in a direction of closing the recording and/or reproducing aperture 84. The torsion coil spring has its opposite side end mounted on the main cartridge body unit 9 for elastically biasing the shutter member 89 in a direction of closing the recording and/or reproducing aperture 84.

The connecting portion 92 of the shutter member 89 is provided with an engagement groove 94 engaged by the foremost parts of shutter actuating arms 69, 70 on the side disc drive device 5. As the main cartridge body unit 9 is intruded into the inside of the disc drive device 5, the foremost parts of the shutter actuating arms 69, 70 are engaged in the engagement groove 94 of the shutter member 89, so that, as the main cartridge body unit 9 is progressively intruded, the shutter member 89 is moved in the direction indicated by arrow c1.

In both major surfaces of the main cartridge body unit 9 is formed a guide recess 96, at a position neighboring to the recording and/or reproducing aperture 84, for extending along the area of movement of the shutter member 89, for guiding the movement of the shutter member 89. Within this guide recess 96 is movably mounted the shutter member 89.

Although not shown, a protective sheet for the signal recording region on each of the major surfaces of the flexible magnetic disc 8 is provided on the inner surface of each of the upper cartridge half 81 and the lower cartridge half 82 within the main cartridge body unit 9. This protective sheet is formed to a disc shape by e.g., a non-woven cloth and is provided with a substantially rectangular cut-out in register with each of the openings 86, 86 of the recording and/or reproducing aperture 84 of each of the upper cartridge half 81 and the lower cartridge half 82.

Although again not shown, a mistaken recording inhibiting member for preventing inadvertent erasure of the information recorded on the flexible magnetic disc 8 is movably mounted on the outer rim of the main cartridge body unit 8. The lower cartridge half 82 of the main cartridge body unit 8 is provided with a pair of positioning openings on both sides along its width for positioning the lower cartridge half 82 in the cartridge loading position within the disc drive device 5. The major surface of the upper cartridge half 81 of the main cartridge body unit 5 is provided with a label display part 9 on which to bond a display label 98 for displaying recording contents of the flexible magnetic disc 8.

When the above-described disc cartridge 7 is mounted on the disc drive device 5, the distal ends of the shutter actuating arms 69, 70 on the disc drive device 5 are engaged in the engagement groove 94 of the shutter member 89, with the shutter member 89 being moved in an opening direction in the direction indicated by arrows c1 in Fig.3 by the shutter actuating arms 69, 70 for opening the recording and/or reproducing aperture 84. The head 30 is introduced into the opened recording and/or reproducing aperture 84 of the disc cartridge 7 to record and/or reproduce the information on or from the signal recording region. As the disc cartridge 7 is ejected from the inside of the cartridge holder 52, the shutter member 89 is moved in the direction indicated by arrow c2 in Fig.4, under the bias of the torsion coil spring, to close the recording and/or reproducing aperture 84.

In the above-described disc cartridge 7, in which the width *x* of the openings 86, 86 of the recording and/or reproducing aperture 84 is of a minimum size necessary to enable the supporting arm 31 carrying the head 30 to be introduced therein, it is possible to suppress vibrations of the signal recording surface of the flexible magnetic disc 8 produced on high speed rotation of the flexible magnetic disc 8. Thus , with the present recording and/or reproducing aperture 84, it is possible to realize high recording density of the flexible magnetic disc 8.

In the above-described disc drive device 5, the operation of recording and/or reproducing the information on or from the flexible magnetic disc 8 of the disc cartridge 7 is explained.

First, the disc drive device 5 is loaded into the PC card slot 3 of the notebook personal computer 1. When the disc drive device 5, loaded in the PC card slot 3, the disc cartridge 7 is inserted through the cartridge insertion/detachment opening 25, with the so-inserted disc cartridge 7 being held in the cartridge holder 52. As the slide chassis 53 is moved in the direction indicated by arrow a1 in Fig.2, the cartridge holder 52 for the disc cartridge 7 is moved in the direction indicated by arrow b1 in Fig.2, so that the disc cartridge 7 is moved from the cartridge loading/unloading position to the cartridge mounting position where it is mounted in position. As the flexible magnetic disc 8 is set on the disc table 44 and run in rotation, the head 30 is intruded into the recording and/or reproducing aperture 84 and moved linearly along the radius of the flexible magnetic disc 8 for information recording and/or reproduction.

In the disc drive device 5, as the thrusting member 65 is thrust, the slide chassis 53 is moved in the direction indicated by arrow a2 in Fig.2, to shift the cartridge holder 52 in the direction indicated by arrow b2 in Fig.2 to shift the disc cartridge 7 held by the cartridge holder 52 from the cartridge mounting position to the cartridge loading/unloading position to eject the disc cartridge 7 via the cartridge insertion/detachment opening 25.

The disc drive device 5 is configured to an outer size in meeting with the PC card slot 3 of the PCMCIA TYPE II standard provided on the notebook personal computer 1 and is loaded in the PC card slot 3 to improve the usefulness of the notebook personal computer.

The disc cartridge 7, applied to the present disc drive device 5, is provided in this manner with a main cartridge body unit 9, formed with the recording and/or reproducing aperture 84 astride the both major surfaces and a lateral surface, so that it is possible to reduce the extent of movement of the head 30 on the side disc drive device 5 into and out of contact with the signal recording surface of the flexible magnetic disc 8 in a direction at right angles therewith, thus enabling the thickness of the main cartridge body unit 9 to be reduced.

Since the disc cartridge 7 is designed so that the width *x* of the openings 86, 86 of the recording and/or reproducing aperture 84 is slightly larger than the width of the supporting arm 31 carrying the head 30, the flexible magnetic disc 8 is prevented from being deviated form planarity to improve operational reliability of the recording and/or reproducing operation as well as to improve the recording density of the flexible magnetic disc 8.

The disc drive device according to the present invention is configured for being detachably mounted on a notebook personal computer having the PC card slot of the PCMCIA TYPE II standard. It is however to be noted that the disc drive device of the present invention may also be applied to a PC card slot 3 provided on another electronic equipment, such as a portable computer or a digital still camera. Industrial Applicability

With the disc drive device of the present invention, which can be loaded in a PC card slot of the PCMCIA TYPE II standard, provided in an electrical equipment, it is possible to reduce the size and the weight of the electrical equipment.

Moreover, with the disc cartridge according to the present invention, the recording and/or reproducing operation may be improved in reliability, while it is possible to increase the recording capacity of the flexible magnetic disc and to reduce the thickness of the main cartridge body unit.

## Claims

1. A disc drive device comprising:
a casing which can be detachably mounted in a PC card slot of the PCMCIA TYPE II standard, provided in an electrical equipment;
a cartridge holder for holding a disc cartridge having a flexible magnetic disc housed therein at a cartridge loading/unloading position enabling loading/unloading of said disc cartridge and a cartridge loading/unloading position enabling information recording and/or reproduction for said flexible magnetic disc, and for causing movement of said disc cartridge;
a magnetic head for recording and/or reproducing the information for said flexible magnetic disc;
a head movement mechanism for causing linear movement of said magnetic head radially of the magnetic disc;
a spindle motor for rotationally driving said magnetic head; and
a connection terminal unit provided facing the outer rim of said casing for being electrically connected to a terminal unit mounted in said PC card slot.

2. The disc drive device according to claim 1 wherein the height of the disc drive device is not larger than 5 mm.

3. The disc drive device according to claim 1 wherein the height of the spindle motor is not larger than 2 mm.

4. The disc drive device according to claim 1 wherein said head movement mechanism has a linear motor having a height not larger than 3 mm.

5. The disc drive device according to claim 1 wherein the outer dimension of the disc drive device is such that the length, width and the height of the disc drive device are 85 mm, 54 mm and 5 mm, respectively.

6. A disc cartridge loaded on a disc drive device comprising: a casing which can be detachably mounted in a PC card slot of the PCMCIA TYPE II standard, provided in an electrical equipment; a cartridge holder for holding a disc cartridge having a flexible magnetic disc housed therein at a cartridge loading/unloading position enabling loading/unloading of said disc cartridge and a cartridge mounting position enabling information recording and/or reproduction for said flexible magnetic disc, and for causing movement of said disc cartridge; a magnetic head for recording and/or reproducing the information for said flexible magnetic disc; a head movement mechanism for causing linear movement of said magnetic head radially of the magnetic disc; a spindle motor for rotationally driving said magnetic head; and a connection terminal unit provided facing the outer rim of said casing for being electrically connected to a terminal unit mounted in said PC card slot; said disc cartridge comprising:
a main cartridge body unit housing said flexible magnetic disc therein;
said main cartridge body unit having a recording and/or reproducing aperture for causing a portion of a signal recording region of said flexible magnetic disc to be exposed to outside across the inner and outer rims of the flexible magnetic disc, said recording and/or reproducing aperture being formed in an uninterrupted fashion across both major surfaces and a lateral surface of said main cartridge body unit.

7. The disc cartridge according to claim 6 wherein said main cartridge body unit is formed of a metallic material.

8. The disc cartridge according to claim 6 wherein said flexible magnetic disc is of a diameter not larger than 1.7 inch.

9. The disc cartridge according to claim 6 wherein said main cartridge body unit is formed of a metallic material.

10. The disc cartridge according to claim 6 wherein said main cartridge body unit is formed to a thickness of not larger than 2 mm.

11. The disc cartridge according to claim 6 wherein said main cartridge body unit is formed to a size in the fore-and-aft direction of 49 mm and to a size in the left-and-right direction not larger than 47 mm.

12. The disc cartridge according to claim 6 wherein said recording and/or reproducing aperture is of a size not larger than 6 mm.
